# EUROPEAN PATENT APPLICATION

(11) **EP 3 089 411 A1**
(43) Date of publication of application: **02.11.2016**
(21) Application number: 14873797.6
(22) Date of filing: 20.05.2014
(51) Int. Cl.: H04L 12/741

(54) **DATA FORWARDING METHOD AND APPARATUS BASED ON INDEXED ALLOCATION**

(30) Priority: 25.12.2013 CN 201310728666
(71) Applicant: Sanechips Technology Co., Ltd., Yantian District Shenzhen Guangdong 518085 (CN)
(72) Inventor: CHEN, Wei, Shenzhen Guangdong 518085 (CN); BU, Fanjin, Shenzhen Guangdong 518085 (CN); YANG, Yongpeng, Shenzhen Guangdong 518085 (CN)
(74) Representative: Novagraaf Technologies
(86) International application number: PCT/CN2014/077898
(87) International publication number: WO 2015/096359

(57) **Abstract**

The embodiments of disclosure disclose a method and device for forwarding data based on index allocation; the method includes that: the index allocation is performed, and a mapping relationship between a data forwarding priority and an index is established; according to the mapping relationship between the data forwarding priority and the index, high priority data of a data forwarding service is written into an address with a low index in a Ternary Content Addressable Memory (TCAM); and the data with the high priority of the data forwarding service is forwarded first.

## Description

### Technical Field

The disclosure relates to the forwarding technologies, and in particular to a method and device for forwarding data based on index allocation.

### Background

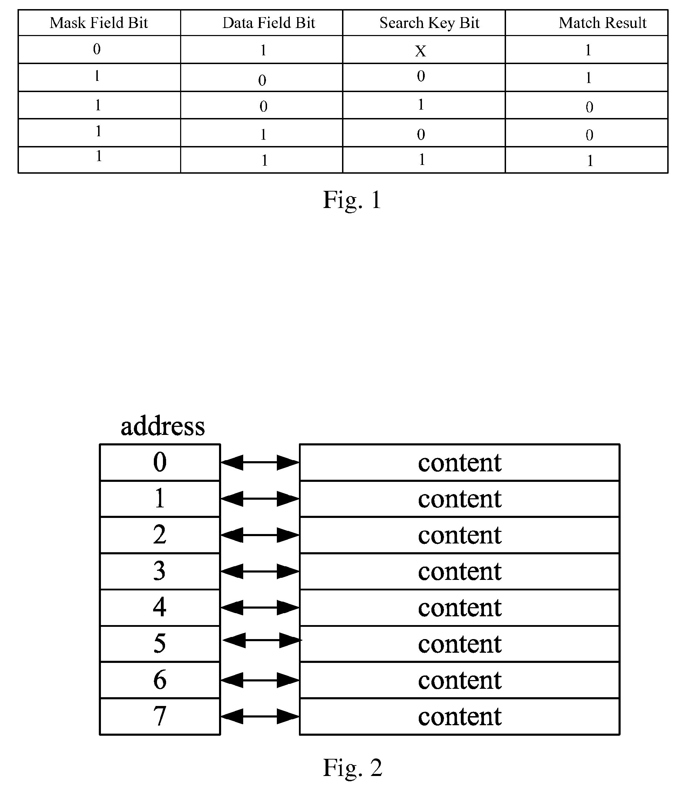

The inventor of the application at least finds, in a process of implementing the technical solutions of embodiments of the application, the following technical problems existing in the related art:
A Ternary Content Addressable Memory (TCAM) is a search chip generally used in a current forwarding device; the TCAM is mainly used for quickly searching an Access Control List (ACL), routing table entries, and so on, and has characteristics of a stable search delay, a high speed and a large capacity. Being different from a common storage device, each bit of the TCAM can store three states, namely a state 0, a state 1 and a state X, wherein the state X is unconcern, that is, whether the bit is 0 or 1, the matching is considered to be hit. In the forwarding device, the application is very common; typically, a field masked by a mask is the unconcerned field during route matching. For implementing the function, a mask field is introduced for data in the TCAM, a data field whose mask is 0 is X, and a matching relationship is shown in Fig. 1; in Fig. 1, a Mask Field Bit is a bit of the mask field, a Data Field Bit is a bit of the data field, a Search Key Bit is a bit of a search key field, and a Match Result is a match result. The mapping relationship of a memory model of the TCAM is shown in Fig. 2; in Fig. 2, address is an address, and content is content.

In the current forwarding device, the TCAM is generally applied to route, ACL, control plane safety, Hierarchical Quality of Service (HQOS) and other services. Since at least one mask is introduced in the TCAM, a situation of simultaneously hitting is bound to occur, an example is given below.

There are two records stored in the TCAM:
record 1:
   data: 1000 1000 1100 0000
   mask: 1111 1111 1100 0000
record 2:
   data: 1000 1000 1110 0000
   mask: 1111 1111 1110 0000
if the matched data is 1000 1000 1111 1111, according to a comparing mode in the above table, both of the two records can be hit actually, then which record hit should be returned in the TCAM. For solving the problem, the TCAM returns the record with a lower address by default. Since the characteristic of first returning the record with the low address by the TCAM is in accordance with a priority matching characteristic in the forwarding service, a problem inevitably occurs, that is, how to ensure that a record with the high priority is written into a low address end of the TCAM to ensure the record with the high priority to be hit preferentially during conflict, so that the record with the high priority is forwarded when a plurality of record searches are hit. Aiming at the problem, an effective solution has not existed in the related art.

### Summary

In view of this, the embodiments of disclosure is intended to provide a method and device for forwarding data based on index allocation, which realize that a record with a high priority is written into a low address end of the TCAM for avoiding conflict, so that the data record with the high priority is first forwarded when a plurality of data forwarding record searches are hit.

The embodiments of the disclosure provide a method for forwarding the data based on the index allocation, which includes the following steps:
performing the index allocation and establishing a mapping relationship between a data forwarding priority and an index; writing, according to the mapping relationship between the data forwarding priority and the index, high priority data of a data forwarding service into an address with a low index in a Ternary Content Addressable Memory, TCAM; and first forwarding the data with the high priority of the data forwarding service.

In an example embodiment, performing the index allocation and establishing the mapping relationship between the data forwarding priority and the index includes: obtaining the data forwarding priority according to a data forwarding sequence when sent data does not carry a priority field; and establishing the mapping relationship between the data forwarding priority and the index according to at least one minimum index in an index link table which is arranged in order and correspondingly allocated for the sent data when applying for an index for the sent data each time.

In an example embodiment, performing the index allocation and establishing the mapping relationship between the data forwarding priority and the index includes: dividing a whole index space into corresponding index subspaces according to the number of priorities, and establishing the mapping relationship between the data forwarding priority and the index when the sent data carries a priority field and the number of priorities in the priority field does not exceed a threshold; wherein the same index subspace corresponds to all the data with the same priority and priority is not considered within the same index subspace.

In an example embodiment, the method further includes: each index subspace is at least divided into a first storage area and a second storage area, wherein the first storage area is used for storing a currently used index, and the second storage area is used for storing a currently free index; completing allocation and recycle of the index through the first storage area and the second storage area.

In an example embodiment, completing the allocation and recycle of the index through the first storage area and the second storage area includes: when the index is allocated, taking out an index node from the second storage area, and inserting the index node into the first storage area according to a size of the index, so as to realize the index allocation; and when the index is released, removing the index node from the first storage area corresponding to the priority of the index node, and putting the index node in the second storage area.

In an example embodiment, performing the index allocation and establishing the mapping relationship between the data forwarding priority and the index includes: maintaining an index space arrangement based on each piece of priority data, and establishing the mapping relationship between the data forwarding priority and the index when sent data carries a priority field and the number of priorities in the priority field exceeds a threshold, wherein the index space arrangement takes the priority into consideration.

In an example embodiment, the method further includes: recording a starting index and an ending index corresponding to each piece of priority data in the index space arrangement, wherein both allocation and recycle of the index are performed based on each piece of priority data, and the index allocated for the data with the high priority is small and the index allocated for the data with the low priority is large.

The embodiments of the disclosure also provide a device for forwarding the data based on the index allocation, which includes:
an index allocating element, which is configured to perform the index allocation and establish a mapping relationship between a data forwarding priority and an index; a data writing-into element, which is configured to, according to the mapping relationship between the data forwarding priority and the index, write high priority data of a data forwarding service into an address with a low index in a Ternary Content Addressable Memory, TCAM; and a data forwarding element, which is configured to first forward the data with the high priority of the data forwarding service.

In an example embodiment, the index allocating element is further configured to, when sent data does not carry a priority field, obtain the data forwarding priority according to a data forwarding sequence, and establish the mapping relationship between the data forwarding priority and the index according to at least one minimum index in an index link table which is arranged in order and correspondingly allocated for the sent data when applying for an index for the sent data each time.

In an example embodiment, the index allocating element is further configured to, when sent data carries a priority field and the number of priorities in a priority field does not exceed a threshold, divide the whole index space into corresponding index subspaces according to the number of priorities, and establish the mapping relationship between the data forwarding priority and the index, wherein the same index subspace corresponds to all the data with the same priority and priority is not considered within the same index subspace.

In an example embodiment, the index allocating element is further configured to, when sent data carries a priority field and the number of priorities in the priority field exceeds a threshold, maintain an index space arrangement based on each piece of priority data, and establish the mapping relationship between the data forwarding priority and the index, wherein the index space arrangement takes the priority into consideration.

The method of the disclosure includes that: the index allocation is performed, and the mapping relationship between the data forwarding priority and the index is established; according to the mapping relationship between the data forwarding priority and the index, the data with the high priority in the data forwarding service is written into the address with the low index in the TCAM; and the data with the high priority in the data forwarding service is first forwarded. Since according to the mapping relationship between the data forwarding priority and the index, the data with the high priority in the data forwarding service is written into the address with the low index in the TCAM, the embodiments of the disclosure realize that the record with the high priority is written into the low address end of the TCAM for avoiding conflict, so that the data record with the high priority is first forwarded when a plurality of data forwarding record searches are hit.

### Brief Description of the Drawings

Fig. 1 is a schematic diagram of a TCMA matching relationship in the related art;
Fig. 2 is a mapping relationship diagram of a memory model of the TCMA in the related art;
Fig. 3 is a flow schematic diagram of a method according to an embodiment of the disclosure;
Fig. 4 is a structural schematic diagram of a device according to an embodiment of the disclosure;
Fig. 5 is a schematic diagram of a start state of an index distribution according to an embodiment of the disclosure;
Fig. 6 is a schematic diagram of a state after multiple index allocation deleting operations according to a first embodiment of the disclosure;
Fig. 7 is a schematic diagram before index borrowing according to the first embodiment of the disclosure;
Fig. 8 is a schematic diagram after index borrowing according to the first embodiment of the disclosure;
Fig. 9 is a schematic diagram of a situation where indexes allocated for a node are continuous according to a second embodiment of the disclosure;
Fig. 10 is a schematic diagram of a situation where indexes allocated for a node are discontinuous according to the second embodiment of the disclosure;
Fig. 11 is an index distribution diagram before squeezing according to the second embodiment of the disclosure
Fig. 12 is an index processing diagram during squeezing according to the second embodiment of the disclosure;
Fig. 13 is an index distribution diagram after squeezing according to the second embodiment of the disclosure; and
Fig. 14 is a schematic diagram of index deletion according to the second embodiment of the disclosure.

### Detailed Description

The implementation of the technical solutions is further elaborated below in combination with the accompanying drawings.

A data forwarding solution based on index allocation of the disclosure can be applied to the field of network search engine, using index management and allocation based on a TCAM application. Aiming at a query request of a user at the network search engine, because a state X of the TCAM application is unconcern, that is, whether a bit is 0 or 1, the matching is considered to be hit; if two data records are obtained currently and both the two records can be hit, then which hit record in the TCAM should be returned to the user at this moment. For this, the TCAM will return a record with a low address by default; since a characteristic of first returning the record with low address of the TCAM is in accordance with a priority matching characteristic of the forwarding service, a problem inevitably occurs, that is, how to ensure that the record with the high priority is written into a low address end of the TCAM to ensure the record with the high priority to be hit preferentially during conflict.

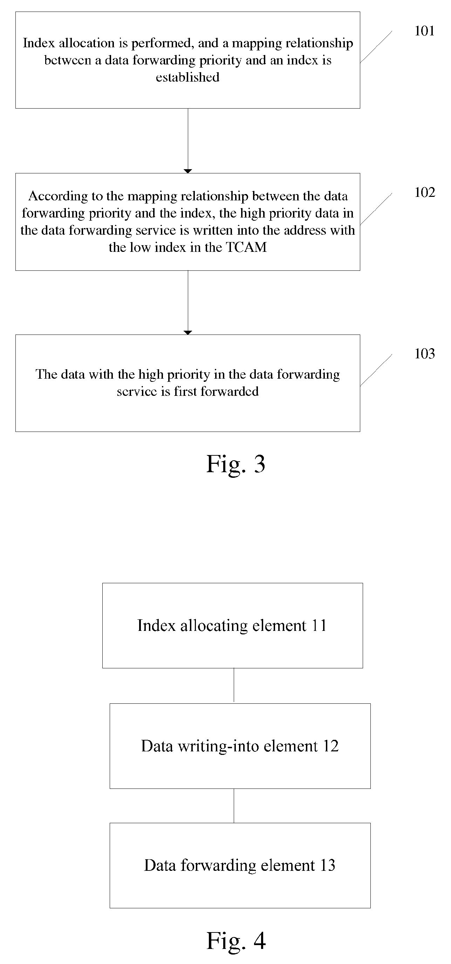

As shown in Fig. 3, a method for forwarding data based on index allocation of the disclosure includes the following steps:
Step 101: the index allocation is performed, and a mapping relationship between a data forwarding priority and an index is established;
Step 102: according to the mapping relationship between the data forwarding priority and the index, high priority data of a data forwarding service is written into an address with a low index in the TCAM; and
Step 103: the data with the high priority of the data forwarding service is first forwarded.

Here, aiming at the index allocation in Step 101, an analysis is made below according to three typical application scenarios:
during the index allocation, by mapping a priority to an index, it is ensured that the record with the high priority is written into the low address end of the TCAM, so that the data record with the high priority is returned when a plurality of data record searches are hit.

There are three typical application scenarios about priority condition in the TCAM:
application scenario 1: a priority of a rule sent first is high, and a priority of a rule sent later is low; a priority matching sequence is determined according to a sending sequence; a priority comparison relationship is not included between the different batches sending; the application scenario 1 is applied to the most common ACL application, for example, a port ACL;
application scenario 2: the sent data carries a priority field, but a priority class is usually limited (a situation where the number of priorities is small), and is not many (usually not exceeding 16); a situation in simultaneous matching is not considered in the same priority; the application scenario 2 is applied to a control plane safety service in a router;
application scenario 3: the sent data carries the priority field, but there are more priorities (a situation where the number of priorities is large), achieving a K (1024) level, even more.

A solving method of the application scenario 1 is simple, only needs to maintain and manage a link table which is arranged in order; when applying for the index each time, a minimum index in the link table is allocated; when releasing the index, the index is inserted in the link table in order.

The embodiments of the disclosure focuses on the situations where the priority is included in the sent data in the application scenario 2 and the application scenario 3.

Aiming at the index allocation in Step 101, the corresponding index allocating method based on the application scenario 2 specifically includes that:
aiming at a characteristic that there are not many priorities specified by the user in the application scenario 2, the whole index space is divided into corresponding index subspaces according to the number of priorities; all the large and small indexes in the index subspaces must be continuous, each index subspace is divided into two areas, namely used_space and free_space, and the two areas complete the allocation and recycle of the index.

It should be noted that: the used_space can also be called a first storage area, and the free_space can also be called a second storage area, which is not repeated here.

Furthermore, dividing the whole index space into the corresponding index subspaces according to the number of priorities, specifically includes that:
the whole index space needs to be divided into several corresponding index spaces according to the number of priorities, and a size of each index space can be specified by the user according to a need or allocated evenly.

Furthermore, dividing each index subspace into two areas, namely the used_space and the free_space, wherein the two areas complete the allocation and recycle of the index specifically includes that:
the used_space saves at least one currently used index, and the free_space saves at least one currently free index. When a index is allocated in the corresponding space according to a user priority, a index node is taken out from the free_space (the index node can be taken out from a head or tail, which is not limited, because the priority is not considered in the same index space), and inserted in the used_space according to a size of the index. When a certain index is released, the index is removed from the used_space corresponding to the priority of the index and put in the free_space.

Aiming at the index allocation in Step 101, the corresponding method for allocating a index based on the application scenario 3 specifically includes that:
aiming at a characteristic that there are many priorities, specified by the user in the application scenario 3, the method maintains a space arrangement of a user priority (usr_pri_space); a starting index and an ending index (introduced for allocating the index for the same priority) of each priority node are recorded in the space arrangement; both the allocation and the recycle of the index are performed based on each priority node, and it is ensured that the index allocated for the record with the high priority is small and the index allocated for the record with the low priority is large.

As shown in Fig. 4, a device for forwarding data based on index allocation of the disclosure includes: an index allocating element 11, which is configured to perform the index allocation and establish a mapping relationship between a data forwarding priority and a index; a data writing-into element 12, which is configured to, according to the mapping relationship between the data forwarding priority and the index, write data with the high priority of a data forwarding service into an address with a low index of the TCAM; and a data forwarding element 13, which is configured to first forward the data with the high priority of the data forwarding service.

By adopting the above technical solutions, the disclosure at least has the following advantages:
the embodiments of the disclosure respectively provides corresponding index allocating schemes according to the different application scenarios of the forwarding chip TCAM; performing data record forwarding based on the index allocating scheme can meet different service requirements. The greatest advantage of the TCAM is a large capacity, a high speed and a stable search delay.

The application scenario 1 is very easy to understand, so it will not be repeated here; only the application scenario 2 and the application scenario 3 are described below in detail.

The first embodiment: this embodiment is a TCAM index allocation instance aiming at the application scenario 2.

In the application scenario 2, the user specifies the priority field, but there should not be too many priorities, and it is not considered that the same priorities are hit simultaneously.

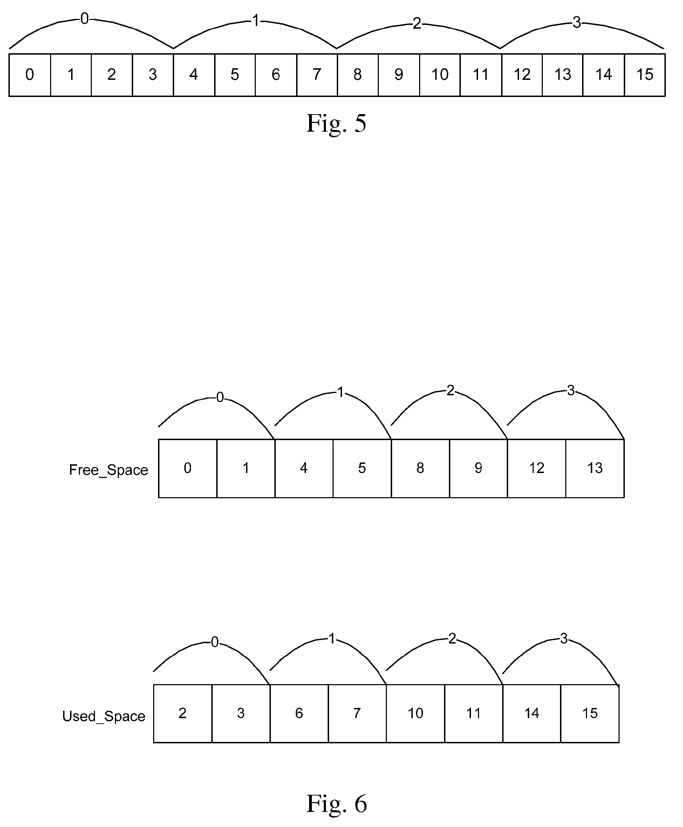

At this point, the whole index space needs to be divided into several corresponding index spaces according to the number of user priorities, and the size of each index space can be specified by the user according to the need or allocated evenly. All the large and small indexes in each index space must be continuous; if there are 4 priorities, a initialized space is shown in Fig. 5.

In addition, it is also needed to establish 4 currently used index allocation spaces for 4 priorities. In other words, each user priority has 2 index spaces, one of which is used for save the currently used index (used_space), and the other is used for saving the currently free index (free_space). When the index is allocated in the corresponding space according to the user priority, the index node is taken out from the free_space (the index node can be taken out from the head or tail, which is not limited, because the priority is not considered in the same index space), and inserted in the used_space according to the size of the index, as shown in Fig. 6.

When a certain index is released, the certain index is removed from the used_space corresponding to the priority of the index and put in the free_space.

The following problem is that if initialization indexes in a certain space are used up, but the whole index space still has free part, then how to process?

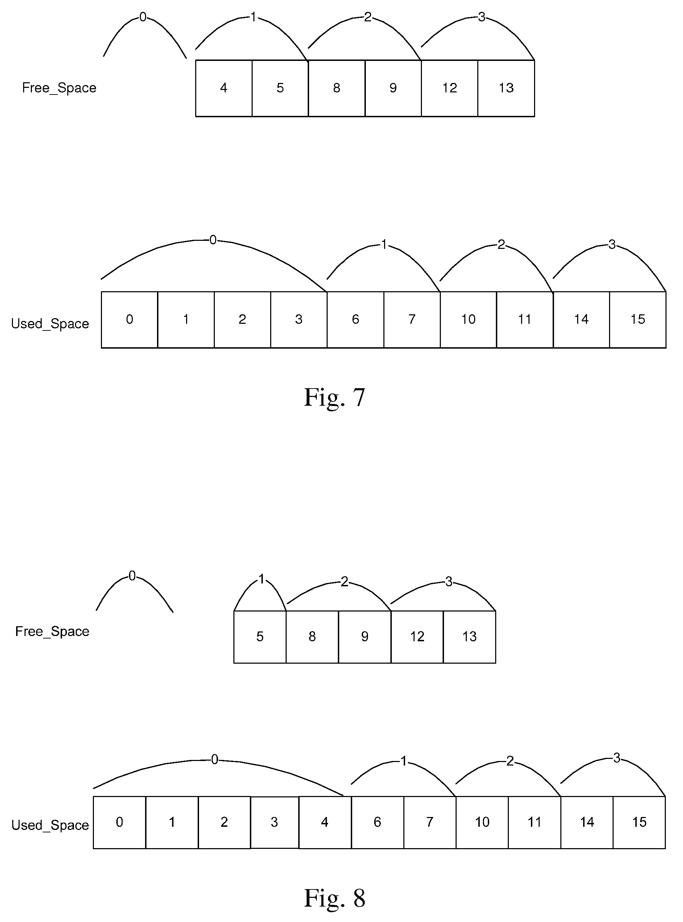

As shown in Fig. 7, all the free indexes of the priority 0 are used up, but there are still free indexes of the priorities 1, 2 and 3, at this point, if the priority of a certain record is 0 again, then it is needed to introduce a borrowing mechanism. There are two borrowing directions, one of which is towards the low priority (towards the right in the present embodiment), the other is towards the high priority (towards the left in the present embodiment). The biggest different between the two direction is that borrowing towards the right needs to borrow the subsequent minimum index (whose matching priority is highest), and borrowing towards the left needs to borrow the highest index. Borrowing steps are described below by taking borrowing towards the right for example:
1) search is performed from the adjacent space to check whether there is an index; note that, it is needed to search both the used_space and the free_space; if both the two spaces are free, the space is skipped, and the next space is checked;
2) the minimum indexes in two adjacent non-free spaces are compared, and the smaller one is taken out to free up a space for a newly inserted record;
3) if the taken-out index belongs to the free_space, then the operation can be ended, like the present embodiment (4<6); at this point, the index space is shown in Fig. 8.

If the taken-out index belongs to the used_space, then rearrangement is introduced; because data of the taken-out index still needs to be stored in the record, if the index 4 belongs to the used_space, then it is needed to find a free space to store the data which is filled in a position of the index 4 originally; at this point, a free index should be preferentially searched in the free_space of the priority; if the free index is found, an old record is directly rewritten in the position of the new found index; if there is not the free index in the index space of the priority, return to 1) to continue processing until the next free index is found.

This algorithm needs to arrange for (the number of priorities minus 1) times under the worst inserting condition. Both the priority free_space and the priority used_space need a management structure to mange, so the spaces should not be too many for avoiding the waste of memory.

The second embodiment: this embodiment is a TCAM index allocation instance aiming at the application scenario 3.

By comparison, the method of the application scenario 2 comparatively wastes the memory, but has the advantage of a small number of rearrangement times; the application scenario 3 is mainly applied to the situation where there are many user priorities. The algorithm always ensures that the obtained index of the record with the high priority is small, and the obtained index of the record with the low priority is large, and supports the index allocation for the records with the same priority (the situation where the records are hit simultaneously should not be considered when the records have the same priority); the continuity of the indexes allocated for the records with the same priority is ensured by the algorithm. The main disadvantage of the algorithm is the comparatively large number of rearrangement times.

The algorithm maintains a space arrangement of user priority (usr_pri_space) which is free at the beginning; a starting index and an ending index (introduced for allocating the index for the same priority) of the current priority node are recorded in the space arrangement; when the index is needed, the algorithm first inserts the index in the usr_pri_space according to the user priority of the newly inserted record; after writing, the previous and latter priority nodes are compared; if there is a free space, then the space is directly allocated; if there is not free space, squeezing is performed; the process of squeezing is similar to the application scenario 2, which is actually a process of rearranging; according to the squeezing direction, the smallest (largest) index of the latter (previous) priority node is taken out, and the record which is squeezed out is written into a new position. Because the insertion of the repeated priority is supported, the process of squeezing has two situations:
1) the currently inserted priority has existed in the usr_pri_space, at this point, if it is needed to squeeze, then squeezing needs to be started from the currently inserted node;
2) the currently inserted priority has not existed in the usr_pri_space, at this point, if it is needed to squeeze, then squeezing needs to be started from a subsequent or previous node.

In addition, it is needed to perform different processing according to a position of a newly inserted node, for example, a head, a tail or a middle.
1) for a node at the tail: it is needed to judge whether the previous node is included; there are two ways, one of which is including the previous node and the other is not including the previous node;
   a) there is not the previous node, which means that there is one, and only one, node in the usr_pri_space currently; the number of indexes included in the current node is judged; if the number is 0, which means that the node is inserted for the first time, then it is only needed to allocate 0; or else, it is judged whether the last index in the current node is the last one in the index space; if so, an index is allocated from the head of the current node; or else, an index is allocated from the tail;
   b) there is the previous node: it is judged whether the last index in the usr_pri_space has been used, if so, it is needed to squeeze forwards, or else, the free index closely following the last index node is directly allocated;
2) for the node at the head: it is needed to judge whether a new priority node is included; there are two ways, one of which is including the new priority node and the other is including the old priority node;
   a) the new priority node:
      it is judged whether the first used index of the subsequent priority node is 0; if not, the value obtained by subtracting 1 from the first index of the latter node is assigned to the new node; if so, it is needed to squeeze backwards to free up a free index position for the new priority node;
   b) the old priority node:
      it is judged whether the first index of the priority node is 0; if not, the value obtained by subtracting 1 from the first index is assigned to the current node; or else, it is needed to squeeze backwards; note that, being different from a), squeezing needs to be started from the current node, that is, from the current priority node actually.
3) for the node in the middle: it is needed to judge whether there is a space between the previous node and the latter node; there are two ways, one of which is that there is a space between the previous node and the latter node, and the other is there is not a space between the previous node and the latter node:
   a) there is a space between the previous node and the latter node:
      at this point, it is only needed to search the free index in the middle to transfer to the new priority node;
   b) there is not a space between the previous node and the latter node:
      at this point, it is needed to squeeze, and it is possible to squeeze forwards or backwards, so as to free up a free index position and assign to the newly written priority node.

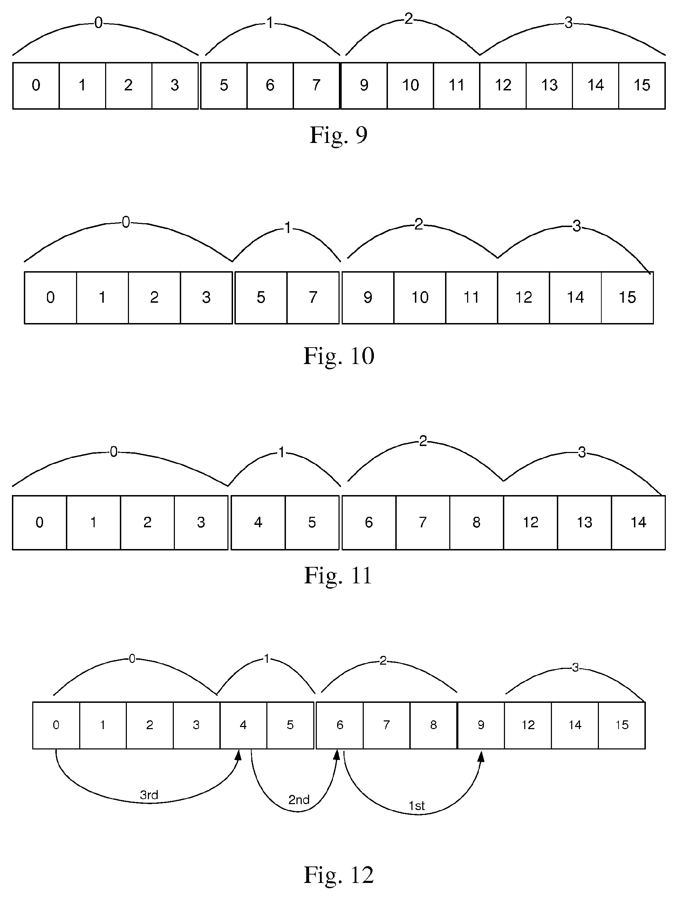

The whole processing flow looks complicated, to put it simply, the algorithm always ensures the rule as follows:
the indexes allocated for the nodes with the same priority are necessarily continuous, and the indexes allocated for the nodes with the different priorities, are not necessarily continuous. The situation in Fig. 9 is allowable, and the situation in Fig. 10 is unallowable, because the indexes in the priority nodes 1 and 3 are not continuous.
when squeezing backwards, the smallest index of the latter priority node is replaced with the smallest index of the priority node;
when squeezing forwards, the largest index of the previous priority node is replaced with the largest index of the priority node;
the operation of squeezing is illustrated by taking squeezing backwards for example:
   a index distribution before squeezing is shown in Fig. 11; if the priority is 0 now and an index is needed, it is found that the priority 0 is at the head node position, and the latter node 4 has been occupied, then squeezing is started from 0, that is, 0 squeezes out 4, 4 squeezes out 6, 6 finally finds that there is a space between 8 and 12, 6 moves to a position behind 8 and next to 9; this operating process is shown in Fig. 12.

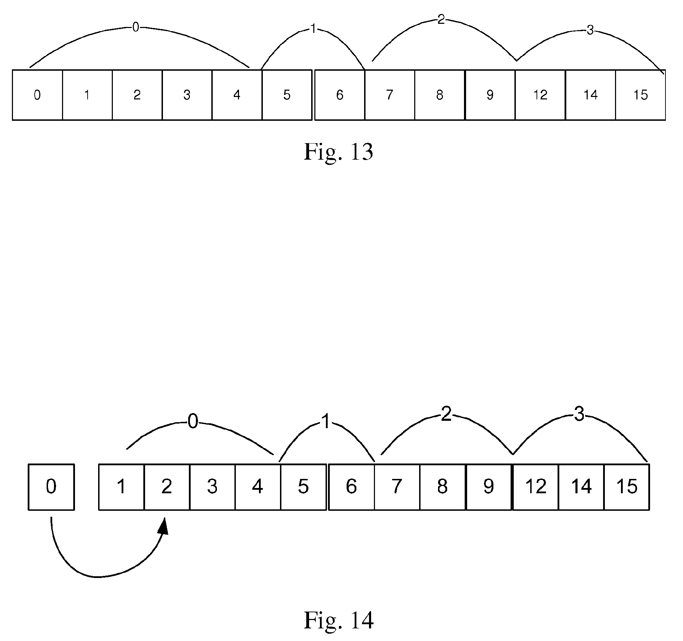

The finally formed priority index distribution is shown in Fig. 13.

Being different from the application scenario 2, because the method requires to ensure that all the indexes in the same priority must be continuous, when a certain index is returned, if the returned index is not at the head or tail, rearrangement is introduced, at this point, the node at the head or tail in the same priority is moved to the deleted position, so as to ensure that the indexes in the same priority are always continuous. As shown in Fig. 13, if the data of the index 2 in the priority 0 is to be deleted, the data of the index 0 (or 4) is moved to the position 2, and corresponding information about the indexes at the head and the tail is modified. The finally formed index space distribution is shown in Fig. 14.

When the integrated components of the disclosure are implemented in the form of software function components and sold or used as independent products, they can also be stored in a computer readable storage medium. Based on this understanding, the technical solutions of the disclosure substantially or the part making a contribution to the related art can be embodied in the form of software product; the computer software product is stored in a storage medium and includes the number of instructions to make a computer device (which can be a personal computer, a server or a network device, etc.) perform all or part of the method in each embodiment of the disclosure. The above storage medium includes: a USB flash disk, a mobile hard disk drive, a Read-Only Memory (ROM), a Random Access Memory (RAM), a magnetic disk or a Compact Disc-ROM (CD-ROM) and other media which can store program codes. Thus, the disclosure is not limited to any specific combination of hardware and software.

Correspondingly, the disclosure also provides a computer storage medium, which stores a computer program; the computer program is used for performing the data forwarding method based on index allocation of the disclosure.

The above is only the example embodiments of the disclosure and not intended to limit the scope of the claims of the disclosure.

### Industrial Applicability

The method of the disclosure includes that: the index allocation is performed, and the mapping relationship between the data forwarding priority and the index is established; according to the mapping relationship between the data forwarding priority and the index, the data with the high priority in the data forwarding service is written into the address with the low index in the TCAM; and the data with the high priority in the data forwarding service is first forwarded. Because according to the mapping relationship between the data forwarding priority and the index, the data with the high priority in the data forwarding service is written into the address with the low index in the TCAM, the disclosure realizes that the record with the high priority is written into the low address end of the TCAM for avoiding conflict, so that the data record with the high priority is first forwarded when a plurality of data forwarding record searches are hit.

## Claims

1. A method for forwarding data based on index allocation, comprising:
performing the index allocation and establishing a mapping relationship between a data forwarding priority and an index;
writing, according to the mapping relationship between the data forwarding priority and the index, high priority data of a data forwarding service into an address with a low index in a Ternary Content Addressable Memory, TCAM; and
first forwarding the data with the high priority of the data forwarding service.

2. The method as claimed in claim 1, wherein performing the index allocation and establishing the mapping relationship between the data forwarding priority and the index comprises:
obtaining the data forwarding priority according to a data forwarding sequence when sent data does not carry a priority field; and
establishing the mapping relationship between the data forwarding priority and the index according to at least one minimum index in an index link table which is arranged in order and correspondingly allocated for the sent data when applying for an index for the sent data each time.

3. The method as claimed in claim 1, wherein performing the index allocation and establishing the mapping relationship between the data forwarding priority and the index comprises:
dividing a whole index space into corresponding index subspaces according to the number of priorities, and establishing the mapping relationship between the data forwarding priority and the index when the sent data carries a priority field and the number of priorities in the priority field does not exceed a threshold; wherein the same index subspace corresponds to all the data with the same priority and priority is not considered within the same index subspace.

4. The method as claimed in claim 3, further comprising: each index subspace is at least divided into a first storage area and a second storage area, wherein the first storage area is used for storing a currently used index, and the second storage area is used for storing a currently free index;
completing allocation and recycle of the index through the first storage area and the second storage area.

5. The method as claimed in claim 4, wherein completing the allocation and recycle of the index through the first storage area and the second storage area comprises:
when the index is allocated, taking out an index node from the second storage area, and inserting the index node into the first storage area according to a size of the index, so as to realize the index allocation; and
when the index is released, removing the index node from the first storage area corresponding to the priority of the index node, and putting the index node in the second storage area.

6. The method as claimed in claim 1, wherein performing the index allocation and establishing the mapping relationship between the data forwarding priority and the index comprises:
maintaining an index space arrangement based on each piece of priority data, and establishing the mapping relationship between the data forwarding priority and the index when sent data carries a priority field and the number of priorities in the priority field exceeds a threshold, wherein the index space arrangement takes the priority into consideration.

7. The method as claimed in claim 6, further comprising: recording a starting index and an ending index corresponding to each piece of priority data in the index space arrangement, wherein both allocation and recycle of the index are performed based on each piece of priority data, and the index allocated for the data with the high priority is small and the index allocated for the data with the low priority is large.

8. A device for forwarding data based on index allocation, comprising:
an index allocating element, which is configured to perform the index allocation and establish a mapping relationship between a data forwarding priority and an index;
a data writing-into element, which is configured to, according to the mapping relationship between the data forwarding priority and the index, write high priority data of a data forwarding service into an address with a low index in a Ternary Content Addressable Memory, TCAM; and
a data forwarding element, which is configured to first forward the data with the high priority of the data forwarding service.

9. The device as claimed in claim 8, wherein the index allocating element is further configured to, when sent data does not carry a priority field, obtain the data forwarding priority according to a data forwarding sequence, and establish the mapping relationship between the data forwarding priority and the index according to at least one minimum index in an index link table which is arranged in order and correspondingly allocated for the sent data when applying for an index for the sent data each time.

10. The device as claimed in claim 8, wherein the index allocating element is further configured to, when sent data carries a priority field and the number of priorities in a priority field does not exceed a threshold, divide the whole index space into corresponding index subspaces according to the number of priorities, and establish the mapping relationship between the data forwarding priority and the index, wherein the same index subspace corresponds to all the data with the same priority and priority is not considered within the same index subspace.

11. The device as claimed in claim 8, wherein the index allocating element is further configured to, when sent data carries a priority field and the number of priorities in the priority field exceeds a threshold, maintain an index space arrangement based on each piece of priority data, and establish the mapping relationship between the data forwarding priority and the index, wherein the index space arrangement takes the priority into consideration.
